# EUROPÄISCHE PATENTANMELDUNG

(11) **EP 1 613 130 A1**
(43) Veröffentlichungstag der Anmeldung: **04.01.2006**
(21) Anmeldenummer: 05009550.4
(22) Anmeldetag: 30.04.2005
(51) Int. Cl.: H05B 3/03, C03B 5/027

(54) **Elektrodensystem für Glas-Schmelzöfen**

(30) Priorität: 29.06.2004 DE 102004031241
(71) Anmelder: Beteiligungen Sorg GmbH & Co. KG, D-97816 Lohr am Main (DE)
(72) Erfinder: Rott, Lothar, 97816 Lohr am Main (DE)
(74) Vertreter: Zapfe, Hans

(57) **Zusammenfassung**

Ein Elektrodensystem für Glas-Schmelzöfen mit einer Schmelzwanne besitzt einen über dem Schmelzenspiegel (20) angeordneten Elektrodenhalter (9) mit einer Kühlmittelführung (24) und eine metallische Heizelektrode (7). Diese ist über eine kühlbare Gewindeverbindung (8) mit dem Elektrodenhalter (9) verbunden, wobei die Kühlmittelführung (24) bis in das obere Ende der Heizelektrode (7) hineinreicht. Um dabei die gekühlte Gewindeverbindung im Ofenraum anzuordnen und das obere gekühlte Ende der Heizelektrode (7) dauerhaft mit einem Mantel (31) aus einem mineralischen Werkstoff zu umgeben und diesen Mantel (31) nicht nur gegen chemischen Verschleiss, sondern auch gegen mechanisches Absprengen durch Temperaturdifferenzen und Temperaturwechsel zu schützen, ist erfindungsgemäss das kühlbare Ende der Heizelektrode (7) von dem Mantel (31) aus einem keramischen Werkstoff umgeben, der mindestens teilweise in einem Schutzgehäuse (32) aus einem korrosions- und temperaturfesten Metall untergebracht ist. Vorzugsweise ist dabei der keramische Mantel (31) über einen Kontaktmörtel (33) mit der Heizelektrode (7) verbunden.

## Beschreibung

Die Erfindung betrifft ein Elektrodensystem für Glas-Schmelzöfen mit einer Schmelzwanne und einem über dem Schmelzenspiegel angeordneten Elektrodenhalter mit einer Kühlmittelführung und einer metallischen Heizelektrode, die über eine kühlbare Gewindeverbindung mit dem Elektrodenhalter verbunden ist, wobei die Kühlmittelführung bis in das obere Ende der Heizelektrode hineinreicht.

Die Beheizung von Glasschmelzen in öfen kann bekanntermassen durch Heizelektroden erfolgen, die durch den Boden, durch die Seitenwände der Schmelzwanne oder von oben her durch die Ofendecke in die Schmelze eingeführt und ggf. gemäss ihres unvermeidbaren Verschleisses nachgeschoben werden. Ein Material, dass der Glasschmelze auf Dauer widersteht, ist bisher nicht bekannt.

Die Elektrodenführung durch den Boden und/oder durch die Seitenwände der Schmelzwanne ist wegen der Notwendigkeit eines Austauschs sowohl konstruktiv als auch betriebsmässig aufwändig, weil die dadurch frei werdenden öffnungen verschlossen werden müssen, um ein Auslaufen von Glasschmelze zu vermeiden. Die Tendenz geht daher in Richtung von oben zugeführter Heizelektroden, die auch als Tauchelektroden oder Top-Elektroden bezeichnet werden.

Üblicherweise sind die Elektroden und ihre Halter - ob gekühlt oder ungekühlt - über stromleitende Gewinde miteinander verbunden, die zum Elektrodenwechsel oder -nachschub lösbar bleiben müssen. Dabei gibt es eine Reihe von sich diametral entgegenstehenden Problemen. Bei ungekühlten Elektrodenverbindungen werden die Gewinde üblicherweise ausserhalb des Ofenraumes gehalten, was eine deutlich grössere Länge der Elektroden oder Elektrodenabschnitte erforderlich macht.

Ein weiteres Problem besteht darin, dass die verwendeten Werkstoffe korrosionsanfällig sind, insbesondere im Bereich von auf der Glasschmelze betriebsbedingt schwimmendem Beschickungsgut und Glasgalle, die besonders aggressiv ist. Bis zur Drei-Phasen-Grenze an der Oberfläche der Glasschmelze kommt die oxidative Wirkung von Luftsauerstoff hinzu, wozu zu bemerken ist, dass z.B. Molybdän oder Wolfram oberhalb von etwa 550°C bis 600°C stark oxidieren.

Durch die EP 0 465 688 B1 ist es bei von oben in eine Glasschmelze eintauchenden Heizelektroden bekannt, zwischen einem Elektrodenhalter und einer aus Molybdän, Platin, Wolfram und ggf. deren Legierungen bestehenden stabförmigen Heizelektrode ein gegen Korrosion resistentes Zwischenstück aus Chrom oder einem oxiddispergierten Material anzuordnen, das den gleichen Durchmesser hat wie die Heizelektrode und in dem konzentrisch ein doppelwandiger Kühlkanal für eine Wasserkühlung angeordnet ist. Dabei ist das für eine Dauerverwendung vorgesehene Zwischenstück, das zwei Gewinde aufweisen muss, im Betrieb in einer Höhe angeordnet in der eine korrosive Galleschicht auf der Glasschmelze schwimmt. Dadurch wird aber der Glasschmelze an einer Stelle ein Teil der Wärme entzogen, die gerade erst durch die von Zeit zu Zeit wegen Verschleisses auszutauschende Heizelektrode zugeführt worden ist.

In der DE 101 32 729 A1 und dem DE 201 21 350 U1 werden die Vor- und Nachteile von Luft- und Wasserkühlung des Elektrodenhalters einer Top-Elektrode gegeneinander abgewogen und schliesslich die Wasserkühlung aus mehreren Gründen verworfen. Dabei liegt die Verbindungsstelle der Heizelektrode und des Elektrodenhalters, z.B. eine Gewindeverbindung, oberhalb eines Abdecksteins, der für die Durchführung der Heizelektrode mit einer Feuerfesthülse ausgekleidet ist. Die Verbindungsstelle zwischen der ungekühlten Heizelektrode und dem mit Kühlrippen zur Luftkühlung versehenen Elektrodenhalter liegt dabei innerhalb von Isolationssteinen, die auf der Ofendecke aufliegen. Der Schmelzenspiegel liegt dabei innerhalb der besagten Feuerfesthülse, wobei ungeklärt bleibt, wie der Schmelzenspiegel innerhalb der Abdecksteine verlaufen könnte, da hierfür kein Hohlraum offenbart ist. Die Heizelektrode ist dabei bis unter den Schmelzenspiegel von einer Schutzhülse umgeben, die einerseits mit dem Elektrodenhalter gasdicht verschweisst sein soll, andererseits aber gegenüber der Heizelektrode einen Luftspalt freilässt. Diese Schutzhülse, die z.B. aus einem Feuerfestmaterial bestehen soll, ist von einer Edelmetallhülle umgeben.

Da weder die Heizelektrode noch die Edelmetallhülle nicht auf Dauer verschleissfest sind, können Glasschmelze und ggf. auf der Glasschmelze schwimmendes Beschickungsgut und/oder Glasgalle in den besagten Luftspalt, einen Ringspalt, eindringen. Wird ein solches Elektrodensystem zum Elektrodenwechsel aus der Ofendecke herausgezogen, so erstarrt das in den Ringspalt eingedrungene Material kurzfristig, was den Elektrodenwechsel vor allem deswegen erschwert, weil die Schutzhülse mit dem Elektrodenhalter verschweisst ist. Eine Lösung für dieses Problem ist nicht offenbart.

Das Problem setzt dabei in dem Falle ein, in dem die Gewindeverbindung im Ofenraum angeordnet und mit einem Kühlsystem versehen ist, das üblicherweise aus einer konzentrischen Anordnung eines Wasserrohres besteht, über dessen Aussenfläche das Kühlwasser zurück fliesst. Die Zwangskühlung führt zu erheblichen Temperaturdifferenzen, die zu einem Abplatzen des keramischen Mantels bzw. überzuges führen.

Durch die DE 100 05 821 A1 ist eine gekühlte Edelmetallelektrode bekannt, die bevorzugt im Bodenbereich eines Schmelzenbehälters angeordnet werden kann, wo ein Auslaufen der Glasschmelze bei einem Elektrodenbruch möglich ist. Diese Gefahr besteht nur bei Wand- und Bodenelektroden. So heisst es, dass die Elektrode durch eine Bohrung im Feuerfestteil eingeführt wird. Auch diese Aussage lässt auf eine Bodenelektrode schliessen. Bezüglich einer Einbauposition von oben fehlt jede Angabe, auf welche Weise und mit welchen Mitteln dies bewerkstelligt wird und wie die Kühlmittelzu- und -abfuhr erfolgt. Zum Stande der Technik wird offenbart, dass der Kern der Elektrode mit einem Halter verschraubt sein kann, dass aber die aus Edelmetall bestehende Aussenhaut der Elektrode mit dem Halter durch eine Schweissnaht verbunden ist. Dies würde ein Auswechseln durch Trennung vom Halter unmöglich machen. Insbesondere ist der korrosive Einfluss eines Drei-Phasen-Systems aus Glas, Glasgalle und der oxidativen Gasatmosphäre im Bereich des oberen Elektrodenendes nicht angesprochen. Ferner ist nicht angesprochen, dass Elektroden auf Dauer nicht verschleissfest sind und abschmelzen. Ein Kühlmittelraum, der sich durch die gasamte Elektrodenlänge erstreckt, würde beim Abschmelzen der Aussenhaut geöffnet und das Kühlmittel mit der heissen Glasschmelze in Kontakt bringen, was zu Dampfexplosionen führen kann.

Die gattungsgemässe EP 0 372 111 B1 offenbart in Figur 6 das typische Abschmelzverhalten von Elektrodenabschnitten. Solche im wesentlichen massiven Metall-Elektroden haben einen wesentlich besseren Wärmewirkungsgrad, weil vom nicht gekühlten Abschnitt weniger Wärme abgeführt wird. Hierbei ist zu berücksichtigen, dass solche Elektroden mehrfach in der gleichen Glasschmelze eingesetzt werden. Hier stehen sich Korrosion und Wärmewirkungsgrad diametral entgegen. Die Figur 6 zeigt, in welcher Weise nachgesetzte Elektrodenabschnitte verbraucht werden. Die unteren Gewindeverbindungen sind nicht mehr gekühlt, weil der Kühlkanal dort unterbrochen ist. Vielmehr heisst es hierzu, dass die Elektroden im Idealfall vollständig verbraucht werden und dass keine Reststücke des Elektrodenmaterials anfallen. Ein solches Abschmelzverhalten ist bei dem Gegenstand der DE 100 05 821 A1 undenkbar, weil dabei das Kühlsystem geöffnet würde.

Das einzige Gemeinsame der Gegenstände der beiden Schriften DE 100 05 821 A1 und EP 0 372 111 B1 besteht darin, dass keine zusätzlichen Schutzmittel gegen Verschleiss durch Korrosion und Oxidation am oberen Ende der Elektrode offenbart sind.

Der Erfindung liegt daher die Aufgabe zugrunde, ein Elektrodensystem der eingangs beschriebenen Gattung anzugeben, bei dem die gekühlte Gewindeverbindung im Ofenraum angeordnet und das obere, gekühlte Ende der Heizelektrode von einem Mantel aus einem mineralischen Werkstoff umgeben ist, und bei dem dieser Mantel nicht nur gegen übermässigen chemischen Verschleiss, sondern auch gegen mechanisches Absprengen durch Temperaturdifferenzen und Temperaturwechsel geschützt ist.

Die Lösung der gestellten Aufgabe erfolgt bei dem eingangs angegebenen Elektrodensystem erfindungsgemäss dadurch, dass das kühlbare Ende der Heizelektrode von einem Mantel aus einem keramischen Werkstoff umgeben ist, der mindestens teilweise in einem Schutzgehäuse aus einem korrosions- und temperaturfesten Metall untergebracht ist.

Dadurch wird die gestellte Aufgabe in vollem Umfangte gelöst, d.h. dieser Mantel ist nicht nur gegen übermässigen chemischen Verschleiss, sondern auch gegen mechanisches Absprengen durch Temperaturdifferenzen und Temperaturwechsel geschützt.

Von besonderer Bedeutung ist dabei, dass der Elektrodenhalter über dem Schmelzenspiegel angeordnet ist, bis in das obere Ende der Heizelektrode hineinreicht, und dass es das kühlbare Ende der Heizelektrode ist, das von dem Mantel aus einem keramischen Werstoff umgeben ist, der seinerseits wiederum in einem Schutzgehäuse aus einem korrosions- und temperaturfesten Metall untergebracht ist. Durch die Begrenzung der Kühlmittelführung ausschliesslich auf das obere Ende der Heizelektrode wird vermieden, dass der Kühlmittelkanal beim Verbrauch der grösseren restlichen Länge der Heizeleketrode geöffnet wird, was zu Dampfexplosionen führen kann. Ausserdem wird dadurch ein besserer Wärmewirkungsgrad erreicht, weil die Wärmeabfuhr gegenüber einer Vollkühlung über die gesamte Länge der Elektrode reduziert wird.

Es ist im Zuge weiterer Ausgestaltungen der Erfindung besonders vorteilhaft, wenn - entweder einzeln oder in Kombination -
* der keramische Mantel über einen Kontaktmörtel mit der Heizelektrode verbunden ist,
* der keramische Mantel aus einem schmelzflüssig gegossenen Werkstoff aus der Gruppe der Aluminium-Zirkon-Silikate besteht,
* der keramische Mantel hohlzylindrisch ausgebildet ist und eine Wandstärke von 10 bis 30 mm und eine Länge von 80 bis 150 mm aufweist,
* der Kontaktmörtel aus einem Werkstoff aus der Gruppe der Zirkon-Mullite besteht,
* der Kontaktmörtel eine Wandstärke von 0,5 bis 2 mm aufweist,
* das Schutzgehäuse aus einem Werkstoff aus der Gruppe der Eisen-Chrom-Legierungen besteht,
* das Schutzgehäuse aus einem Edelstahl, z.B. des Typs PM 1000, besteht,
* das Schutzgehäuse eine Wandstärke von 0,25 bis 1,0 mm besitzt,
* das Schutzgehäuse zumindest die äussere Umfangsfläche des keramischen Mantels überdeckt, und/oder, wenn
* das Schutzgehäuse und die obere Stirnseite des keramischen Mantels von einem Ofenkitt überdeckt sind, der mit dem Elektrodenhalter verbunden ist.

Weitere Einzelheiten und Vorteile ergeben sich aus der Detailbeschreibung.

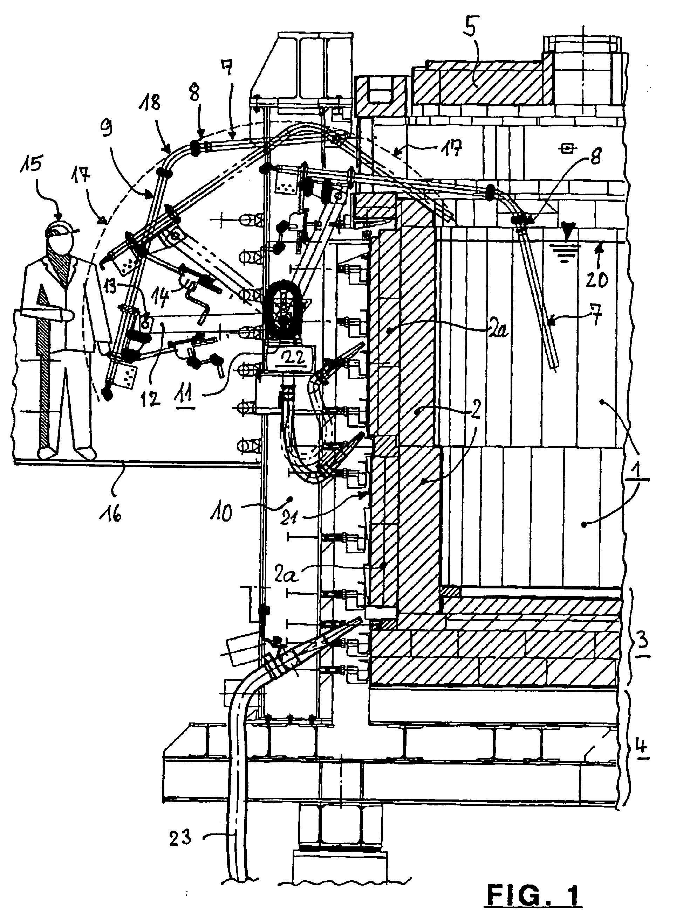

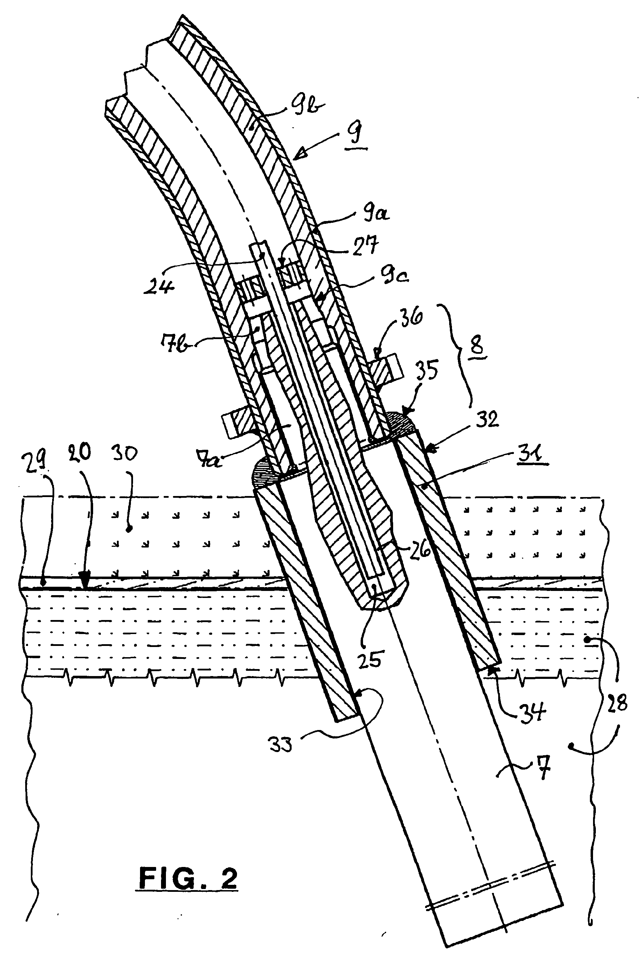

Ein Ausführungsbeispiel des Erfindungsgegenstandes und dessen Wirkungsweise und Vorteile werden nachfolgend anhand der Figuren 1 und 2 näher erläutert.

Es zeigen:
- Figur 1: einen teilweisen Vertikalschnitt durch einen Glas-Schmelzofen und eine Seitenansicht des Elektroden-Schwenksystems und
- Figur 2: einen teilweisen Vertikalschnitt durch die Gewindeverbindung von Elektrodenhalter und Heizelektrode.

Die Figur 1 zeigt einen relevanten Ausschnitt aus einer Schmelzwanne 1 mit einem senkrechten Wannenrand 2 und einem waagrechten Wannenboden 3, der auf einem Traggerüst 4 aus Doppel-T-Profilen ruht. über der Schmelzwanne 1 befindet sich ein Ofendeckel 5. Zwischen diesem und dem Wannenrand 2 befindet sich mindestens ein Fenster 6 für das Ein- und Ausschwenken jeweils einer Heizelektrode 7, die über eine Schraubverbindung 8 mit einem Elektrodenhalter 9 verbunden ist. Einzelheiten dieser Schraubverbindung 8 sind in Figur 2 im Detail dargestellt.

Ausserhalb der Schmelzwanne 1 befindet sich - auf dem Traggerüst 4 befestigt - eine senkrechte Tragsäule 10, an der ein Schwenkgelenk 11 befestigt ist, um das ein Schwenkhebel 12 mit einem weiteren Gelenk 13 schwenkbar ist. Die relative Winkelstellung und damit die Eintauchtiefe der Heizelektrode 7 ist durch einen Kurbeltrieb 14 einstellbar. Die Schwenkbewegung wird durch eine Bedienungsperson 15 herbeigeführt, die auf einer Arbeitsplattform 16 steht. Die Schwenkbahn 17 des am weitesten aussen liegenden Punktes eines Kniestücks 18 innerhalb des Elektrodenhalters 9 ist durch einen gestrichelten Kreisbogen angedeutet, der Schmelzenspiegel 20 durch eine Linie.

Der Wannenrand 2 ist unter Einschluss einer Wärmedämmung 2a aussen von einem Metallmantel 21 umgeben, auf den mehrere, nicht näher bezeichnete Kühldüsen ausgerichtet sind, die an Versorgungskanäle 22 und 23 angeschlossen sind. Es ist erkennbar, dass die Heizelektrode 7 bei voll ausgeschwenktem Elektrodenhalter 9 von aussen auswechselbar ist.

Die Figur 2 zeigt das ofeninnere Ende des Elektrodenhalters 9, der ein Aussenrohr 9a aus einem gegen Hitze, chemische und mechanische Einflüsse resistenten Material wie Edelstahl aufweist und ein Innenrohr 9b aus einem Strom gut leitenden Werkstoff wie Kupfer. Das Innenrohr 9b besitzt an seinem unteren Ende ein Innengewinde und eine Kegelfläche 9c.

Im Innern des Elektrodenhalters 9 befindet sich eine Kühlmittelführung 24 in Form eines Rohres, dessen Ende merklich über das Ende des Elektrodenhalters 9 vorsteht und in einen Hohlraum 25 der Heizelektrode 7 hineinragt. Dadurch wird ein Kühlmittel wie beispielsweise Wasser in das obere Ende der Heizelektrode 7 eingeleitet und über einen Ringspalt 26 wieder in den Elektrodenhalter 9 zurückgeführt.

Das obere Ende der Heizelektrode 7 besitzt einen im Durchmesser verringerten Gewindestutzen 7a und ein kegelförmiges Ende 7b, das zur Kegelfläche 9c des Innenrohres komplementär ausgebildet ist, um durch das Einschrauben einen guten elektrischen Kontakt herzustellen. Die Kühlmittelführung 24 ist durch eine Lochplatte 27 zentrisch im Elektrodenhalter 9 fixiert.

Der Inhalt der in Figur 1 dargestellten Schmelzwanne 1 besteht aus einer Glasschmelze 28, einer darauf schwimmenden Galleschicht 29 und einer wiederum darauf schwimmenden Gemengeschicht 30 aus den Glasrohstoffen, zu denen auch Glasbruch aus Recycling-Material gehören kann.

Im Bereich der Glasoberfläche, der Galleschicht 29 und der Gemengeschicht 30 ist die Heizelektrode 7 von einem aufgeschobenen hohlzylindrischen Mantel 31 umgeben, der aus einem keramischen Werkstoff besteht und von einem dünnwandigen Schutzgehäuse 32 aus einem korrosions- und temperaturfesten Werkstoff wie Edelstahl umgeben ist. Der Mantel 31 ist seinerseits über eine Schicht aus Kontaktmörtel 33 mit der Heizelektrode 7 verklebt. Die untere ringförmige Stirnseite 34 des Mantels 31 braucht nicht durch einen Metallring abgedeckt zu werden. Es empfiehlt sich jedoch, die obere Stirnfläche gegenüber dem Elektrodenhalter 9 durch einen Wulst aus keramischem Ofenkitt 35 abzudichten, da an dieser Stelle zur Vermeidung einer mechanischen überbestimmung gegenüber den kegelförmigen Kontaktflächen (7b/9c) ein scheibenförmiger Spalt verbleibt, der verschlossen werden sollte. Zum Ansetzen eines Schraubenschlüssels ist im unteren Endbereich des Elektrodenhalters ein Ring 36 angeordnet, der eine mehrkantige Aussenseite aufweist.

Wie ersichtlich, ist die Gewindeverbindung 8 durch die Innenkühlung auch nach längerem Betrieb leicht lösbar, und der durch das Schutzgehäuse 32 abgedeckte Mantel 31 ist dadurch gegen ein Absprengen durch steile Temperaturgradienten und Erosion durch die aggressiven Medien der Umgebung geschützt.

### Bezugszeichenliste:

- 1: Schmelzwanne
- 2: Wannenrand
- 2a: Wärmedämmung
- 3: Wannenboden
- 4: Traggerüst
- 5: Ofendeckel
- 6: Fenster
- 7: Heizelektrode
- 7a: Gewindestutzen
- 7b: Ende
- 8: Schraubverbindung
- 9: Elektrodenhalter
- 9a: Aussenrohr
- 9b: Innenrohr
- 9c: Kegelfläche
- 10: Tragsäule
- 11: Schwenkgelenk
- 12: Schwenkhebel
- 13: Gelenk
- 14: Kurbeltrieb
- 15: Bedienungsperson
- 16: Arbeitsplattform
- 17: Schwenkbahn
- 18: Kniestück
- 19: Schwenkgelenk
- 20: Schmelzenspiegel
- 21: Metallmantel
- 22: Versorgungskanal
- 23: Versorgungskanal
- 24: Kühlmittelführung
- 25: Hohlraum
- 26: Ringspalt
- 27: Lochplatte
- 28: Glasschmelze
- 29: Galleschicht
- 30: Gemengeschicht
- 31: Mantel
- 32: Schutzgehäuse
- 33: Kontaktmörtel
- 34: Stirnseite
- 35: Ofenkitt
- 36: Ring

## Patentansprüche

1. Elektrodensystem für Glas-Schmelzöfen mit einer Schmelzwanne (1) und einem über dem Schmelzenspiegel (20) angeordneten Elektrodenhalter (9) mit einer Kühlmittelführung (24) und einer metallischen Heizelektrode (7), die über eine kühlbare Gewindeverbindung (8) mit dem Elektrodenhalter (9) verbunden ist, wobei die Kühlmittelführung (24) bis in das obere Ende der Heizelektrode (7) hineinreicht, **dadurch gekennzeichnet, dass** das kühlbare Ende der Heizelektrode (7) von einem Mantel (31) aus einem keramischen Werkstoff umgeben ist, der mindestens teilweise in einem Schutzgehäuse (32) aus einem korrosions- und temperaturfesten Metall untergebracht ist.

2. Elektrodensystem nach Anspruch 1, **dadurch gekennzeichnet, dass** der keramische Mantel (31) über einen Kontaktmörtel (33) mit der Heizelektrode (7) verbunden ist.

3. Elektrodensystem nach Anspruch 1, **dadurch gekennzeichnet, dass** der keramische Mantel (31) aus einem schmelzflüssig gegossenen Werkstoff aus der Gruppe der Aluminium-Zirkon-Silikate besteht.

4. Elektrodensystem nach Anspruch 3, **dadurch gekennzeichnet, dass** der keramische Mantel (31) hohlzylindrisch ausgebildet ist und eine Wandstärke von 10 bis 30 mm und eine Länge von 80 bis 150 mm aufweist.

5. Elektrodensystem nach Anspruch 2, **dadurch gekennzeichnet, dass** der Kontaktmörtel (33) aus einem Werkstoff aus der Gruppe der Zirkon-Mullite besteht.

6. Elektrodensystem nach Anspruch 2, **dadurch gekennzeichnet, dass** der Kontaktmörtel (33) eine Wandstärke von 0,5 bis 2 mm aufweist.

7. Elektrodensystem nach Anspruch 1, **dadurch gekennzeichnet, dass** das Schutzgehäuse (32) aus einem Werkstoff aus der Gruppe der Eisen-Chrom-Legierungen besteht.

8. Elektrodensystem nach Anspruch 1, **dadurch gekennzeichnet, dass** das Schutzgehäuse (32) aus einem Edelstahl besteht.

9. Elektrodensystem nach Anspruch 1, **dadurch gekennzeichnet, dass** das Schutzgehäuse (32) eine Wandstärke von 0,25 bis 1,0 mm besitzt.

10. Elektrodensystem nach Anspruch 1, **dadurch gekennzeichnet, dass** das Schutzgehäuse (32) zumindest die äußere Umfangsfläche des keramischen Mantels (31) überdeckt.

11. Elektrodensystem nach Anspruch 10, **dadurch gekennzeichnet, dass** das Schutzgehäuse (32) und die obere Stirnseite des keramischen Mantels (31) von einem Ofenkitt (35) überdeckt sind, der mit dem Elektrodenhalter (9) verbunden ist.
